(19) 

Europäisches
Patentamt
European
Patent Office
Office européen
des brevets

(11) **EP 4 079 893 A2**

(12) **EUROPEAN PATENT APPLICATION**
published in accordance with Art. 153(4) EPC

(43) Date of publication:
 **26.10.2022 Bulletin 2022/43**

(21) Application number: **20902830.7**

(22) Date of filing: **09.12.2020**

(51) International Patent Classification (IPC):
 *C22C 38/02* (2006.01)     *C22C 38/04* (2006.01)
 *C22C 38/06* (2006.01)     *C22C 38/42* (2006.01)
 *C22C 38/44* (2006.01)     *C22C 38/46* (2006.01)
 *C21D 8/12* (2006.01)

(52) Cooperative Patent Classification (CPC):
 **C21D 8/12; C22C 38/02; C22C 38/04; C22C 38/06;**
 **C22C 38/42; C22C 38/44; C22C 38/46;** Y02T 10/64

(86) International application number:
 **PCT/KR2020/017978**

(87) International publication number:
 **WO 2021/125685 (24.06.2021 Gazette 2021/25)**

(84) Designated Contracting States:
 **AL AT BE BG CH CY CZ DE DK EE ES FI FR GB**
 **GR HR HU IE IS IT LI LT LU LV MC MK MT NL NO**
 **PL PT RO RS SE SI SK SM TR**
 Designated Extension States:
 **BA ME**
 Designated Validation States:
 **KH MA MD TN**

(30) Priority: **19.12.2019 KR 20190170980**

(71) Applicant: **POSCO**
 **Pohang-si, Gyeongsangbuk-do 37859 (KR)**

(72) Inventors:
 • **PARK, Junesoo**
  **Pohang-si Gyeongsangbuk-do 37859 (KR)**
 • **HONG, Jaewan**
  **Pohang-si Gyeongsangbuk-do 37859 (KR)**
 • **SONG, Dae-Hyun**
  **Pohang-si Gyeongsangbuk-do 37859 (KR)**

(74) Representative: **Zech, Stefan Markus**
 **Meissner Bolte Patentanwälte**
 **Rechtsanwälte Partnerschaft mbB**
 **Postfach 86 06 24**
 **81633 München (DE)**

(54) **NON-ORIENTED ELECTRICAL STEEL SHEET AND METHOD FOR MANUFACTURING SAME**

(57)  An embodiment of the present invention provides a non-oriented electrical steel sheet including. in wt%: Si: 2.5 to 4.0 %, Mn: 0.1 to 1.0 %, Al: 0.5 to 1.5 %, P: 0.002 to 0.015 %, and As: 0.002 to 0.01 %, and the balance of Fe and inevitable impurities, and satisfying Formula 1 and Formula 2.

[Formula 1]

$$0.005 \leq ([P]+[As]) \leq 0.015$$

(In Formula 1, [P] and [As] represent a content (wt%) of P and As, respectively.)

[Formula 2]

$$[STD] \leq 0.7 \times [GS]$$

([GS] is an average grain size ($\mu$m) measured when 10,000 or more grains having a grain size of 5 to 500 $\mu$m are observed on a surface of the steel sheet, and STD is a standard deviation ($\mu$m) at that time.)

EP 4 079 893 A2

## Description

### [Technical Field]

An embodiment of the present invention relates to a non-oriented electrical steel sheet and a manufacturing method thereof. Specifically, an embodiment of the present invention relates to a non-oriented electrical steel sheet and a manufacturing method thereof that may improve magnetism by appropriately adding As and P, and improving texture.

### [Background Art]

A non-oriented electrical steel sheet is mainly used as a material for iron cores of motors and generators, which are rotating devices and of small transformers, which are stationary devices. Recently, as regulations on environmental conservation and energy saving are strengthened, there is an increasing demand for improving efficiency of a motor or generator, which is an energy conversion device that converts electrical energy into mechanical energy or mechanical energy into electrical energy. Since the non-oriented electrical steel sheet is a material used as a material for the iron cores in the rotating devices such as the motors and the generators and the stationary devices such as the small transformers, the demand for improving the efficiency of the motors or the generators is leading to the demand for improving characteristics of the non-oriented electrical steel sheet. Typical magnetic properties of the non-oriented electrical steel are iron loss and magnetic flux density, and the lower the iron loss of the non-oriented electrical steel sheet, the less iron loss occurs in a process of magnetizing an iron core, thereby improving efficiency, and since the higher the magnetic flux density, the larger a magnetic field may be induced with the same energy, and since less current may be applied to obtain the same magnetic flux density, energy efficiency may be improved. Therefore, in order to improve the energy efficiency, it may be essential to develop a magnetically excellent non-oriented electrical steel sheet with low iron loss and high magnetic flux density. Among the important characteristics of the non-oriented electrical steel sheet, a most basic and efficient method for lowering iron loss is to increase the amount of Si, Al, and Mn, which are elements with high specific resistance, or to reduce a thickness of the steel sheet. However, increasing the amount of Si, Al, and Mn added increases the specific resistance of the steel to reduce an eddy current loss among the iron loss of the non-oriented electrical steel sheet to reduce the iron loss, but an effect varies depending on an addition ratio, and as the amount of added alloying element increases, the magnetic flux density deteriorates, so that in order to secure excellent iron loss and magnetic flux density, it is necessary to appropriately control the addition ratio between the appropriate amount of addition and the amounts of Si, Al, and Mn. The method of reducing the thickness is also very effective in reducing the iron loss, but a thin steel sheet has a disadvantage of significantly increasing a processing cost due to poor productivity and workability. As a method to improve the magnetic flux density while lowering the iron loss of the non-oriented electrical steel sheet, technologies for improving magnetic properties by improving a texture by using special additive elements such as REM or for introducing additional manufacturing processes such as warm rolling, rolling twice, and annealing twice have also been reported. However, all of these technologies cause an increase in manufacturing cost or have difficulties in mass production, so it is necessary to develop a technology that produces excellent magnetic properties and is easy to produce commercially. In addition, technologies for suppressing and controlling formation of inclusions by significantly suppressing an amount of impurities added and adding an element such as Ca are being developed, but these technologies also cause an increase in manufacturing cost, and it is difficult to clearly secure effects thereof. There have been continuous efforts to solve these problems, and many technologies have been developed. Among the prior arts for the non-oriented electrical steel sheet, a method that may secure excellent magnetism by improving a texture by controlling a heating rate to 50 □/s or more during final annealing has been presented, but the method does not consider the feature in which the magnetic properties may be inferior as a microstructure becomes non-uniform, apart from the result of improving the texture according to a result of rapid heating. In addition, in order to improve magnetism through the improvement of the texture, a method of controlling a composition weight ratio ($MnO/SiO_2$) of MnO and $SiO_2$ in oxide-based inclusions in steel; of performing, during hot rolling, finish rolling in a single-phase ferrite region in which a friction coefficient between a steel and a roll is 0.2 or less and a finish rolling temperature is 700 □ or higher; and then of annealing hot-rolled sheet, cold rolling, and annealing the cold-rolled sheet has been suggested, but this method has a limitation in that it is difficult to produce commercially due to low productivity because the thickness of the hot-rolled sheet must be controlled to 1.0 mm or less. In addition, in order to manufacture a non-oriented electrical steel sheet with excellent magnetic properties in a rolling direction, in addition to processes of hot rolling, hot-rolled sheet annealing, cold rolling, and cold-rolled sheet annealing, a process of skin pass rolling with a reduction ratio of 3 to 10 % and annealing again has been suggested. However, this also has a problem of cost increase due to the additional processes. In addition, a method in which a high strength steel sheet before stress relief annealing and a low iron loss steel sheet due to ease of grain growth during annealing may be obtained by reducing certain impurity elements contained in steel to a very low level and adding a skin pass process has been presented, but this method has a disadvantage of causing an increase in cost for extremely low management of impurities. In addition, a technology in which, by adding rare earth elements such as Ca, Mg, and REM, precipitation of MnS is suppressed, so that the crystal grains are small before stress relief but the crystal grains grow during stress relief annealing to have excellent iron loss, has been presented. However, this is also accompanied by an increase in manufacturing cost for addition and control of additional elements, and it is difficult to secure an effect thereof when the stress relief annealing is not performed.

**[Disclosure]**

**[Description of the Drawings]**

[Technical Problem]

An embodiment of the present invention is to provide a non-oriented electrical steel sheet and a manufacturing method thereof. Specifically, an embodiment of the present invention provides a non-oriented electrical steel sheet and a manufacturing method thereof that may improve magnetism by appropriately adding As and P, and improving texture.

**[Technical Solution]**

An embodiment of the present invention provides a non-oriented electrical steel sheet including: in wt%, Si: 2.5 to 4.0 %, Mn: 0.1 to 1.0 %, Al: 0.5 to 1.5 %, P: 0.002 to 0.015 % and As: 0.002 to 0.01 %, and the balance of Fe and inevitable impurities, and satisfying Formula 1 and Formula 2.

$$[\text{Formula 1}]$$

$$0.005 \leq ([P]+[As]) \leq 0.015$$

(In Formula 1, [P] and [As] represent a content (wt%) of P and As, respectively.)

$$[\text{Formula 2}]$$

$$[STD] \leq 0.7 \times [GS]$$

([GS] is an average grain size ($\mu$m) measured when 10,000 or more grains having a grain size of 5 to 500 $\mu$m are observed on a surface of the steel sheet, and STD is a standard deviation ($\mu$m) at that time.)

The non-oriented electrical steel sheet according to the embodiment of the present invention may further include one or more of C: 0.005 wt% or less, S: 0.005 wt% or less, N: 0.005 wt% or less, and Ti: 0.005 wt% or less.

The non-oriented electrical steel sheet according to the embodiment of the present invention may further include one or more of Sn: 0.2 wt% or less and Sb: 0.2 wt% or less.

The non-oriented electrical steel sheet according to the embodiment of the present invention may further include one or more of Cu: 0.05 wt% or less, Ni: 0.05 wt% or less, Cr: 0.05 wt% or less, Zr: 0.01 wt% or less, Mo: 0.01 wt% or less, and V: 0.01 wt% or less.

The non-oriented electrical steel sheet according to the embodiment of the present invention may have an average grain size ([GS]) of 90 to 200 $\mu$m.

The non-oriented electrical steel sheet according to the embodiment of the present invention may have a standard deviation ([STD]) of 60 to 100 $\mu$m.

The non-oriented electrical steel sheet according to the embodiment of the present invention may have a specific resistance ($\rho$) of 60 $\mu\Omega$ cm or more at room temperature.

The non-oriented electrical steel sheet according to the embodiment of the present invention may have iron loss (W15/50) of 2.0 W/Kg or less.

The non-oriented electrical steel sheet according to the embodiment of the present invention may satisfy the following Formula 3 to Formula 5.

$$[\text{Formula 3}]$$

$$\text{Iron loss (W5/50)/Iron loss (W15/50)} \leq 0.15$$

[Formula 4]

Iron loss (W10/50)/Iron loss (W15/50)≤0.45

[Formula 5]

Magnetic flux density (B1)/Magnetic flux density (B50)≥0.65

A manufacturing method of a non-oriented electrical steel sheet according to an embodiment of the present invention includes: heating a slab containing Si at 1.5 to 4.0 wt%, Al at 2.5 to 0.011 wt%, Mn at 0.1 to 0.40 wt%, S at 0.5 to 0.01 wt%, As at 0.002 to 0.015 wt%, Mg at 0.002 to 0.003 wt%, and the balance containing Fe and inevitable impurities; hot rolling the slab to manufacture a hot rolled sheet; cold rolling the hot rolled sheet to manufacture a cold rolled sheet; and final annealing the cold rolled sheet.

[Formula 1]

$$0.005 \leq ([P]+[As]) \leq 0.015$$

(In Formula 1, [P] and [As] represent a content (wt%) of P and As, respectively.)

In the final-annealing, a tension of an inlet side of an annealing furnace may be 0.15 to 0.31 kgf/mm$^2$, a tension of an outlet of the annealing furnace may be 0.36 to 0.62 kgf/mm$^2$, and a cooling rate to 700 °C during cooling after cracking may be 30 °C/s or less.

In the final-annealing, a difference (TS2-TS1) between a tension (TS2) of the outlet side of the annealing furnace and a tension (TS1) of the inlet side of the annealing furnace may be 0.20 to 0.40 kgf/mm$^2$.

**[Advantageous Effects]**

According to the embodiment of the present invention, by appropriately adding As and P and by improving a texture, it is possible to provide a non-direction electrical steel sheet with improved magnetism.

**[Mode for Invention]**

It will be understood that, although the terms first, second, third, etc. may be used herein to describe various elements, components, regions, areas, zones, layers, and/or sections, they are not limited thereto. These terms are only used to distinguish one element, component, region, area, zone, layer, or section from another element, component, region, layer, or section. Therefore, a first part, component, region, area, zone, layer, or section to be described below may be referred to as second part, component, area, layer, or section within the range of the present invention.

The technical terms used herein are to simply mention a particular embodiment and are not meant to limit the present invention. An expression used in the singular encompasses an expression of the plural, unless it has a clearly different meaning in the context. In the specification, it is to be understood that the terms such as "including", "having", etc., are intended to indicate the existence of specific features, regions, numbers, stages, operations, elements, components, and/or combinations thereof disclosed in the specification, and are not intended to preclude the possibility that one or more other features, regions, numbers, stages, operations, elements, components, and/or combinations thereof may exist or may be added.

When referring to a part as being "on" or "above" another part, it may be positioned directly on or above the other part, or another part may be interposed therebetween. In contrast, when referring to a part being "directly above" another part, no other part is interposed therebetween.

Unless otherwise stated, % means wt%, and 1 ppm is 0.0001 wt%.

In embodiments of the present invention, inclusion of an additional element means replacing the balance of iron (Fe) by an additional amount of the additional elements.

Unless otherwise defined, all terms used herein, including technical or scientific terms, have the same meanings as those generally understood by those with ordinary knowledge in the field of art to which the present invention belongs. Terms defined in commonly used dictionaries are further interpreted as having meanings consistent with the relevant technical literature and the present disclosure, and are not to be construed as having idealized or very formal meanings unless defined otherwise.

The present invention will be described more fully hereinafter with reference to the accompanying drawings, in which embodiments of the invention are shown. As those skilled in the art would realize, the described embodiments may be modified in various different ways, all without departing from the spirit or scope of the present invention.

In an embodiment of the present invention, important elements to be added in an amount and content to be controlled are Si, Al, Mn, P, and As. The most effective way to lower iron loss is to increase specific resistance of steel by adding Si, Al, and Mn. However, when Si, Al, and Mn are added to Fe, iron loss decreases, but a decrease in magnetic flux density due to a decrease in saturation magnetic flux density cannot be avoided, and in a high alloy system with a large amount of Si, Al, and Mn added, the cold rolling property is inferior due to a increase in brittleness of the material, making it difficult to secure productivity. Therefore, in order to secure productivity while having low iron loss and high magnetic flux density, an appropriate combination of Si, Al, and Mn addition amounts and addition ratios is required. P is a grain boundary and surface segregation element, and is known as an element capable of improving magnetism by improving a texture. Through the present invention, it was confirmed that As is also a segregation element like P and may improve magnetism. However, in the case of the segregation element as described above, as the amount of the segregation element added increases, the rolling property becomes inferior, so the amount of the segregation element added must be appropriately controlled. In addition, when P and As are complexly added within a predetermined range, the effect is more clearly obtained, so it is also necessary to control the two elements within a predetermined range from a viewpoint of magnetism and productivity.

A non-oriented electrical steel sheet according to an embodiment of the present invention includes, in wt%: Si: 2.5 to 4.0 %, Mn: 0.1 to 1.0 %, Al: 0.5 to 1.5 %, P: 0.002 to 0.015 %, and As: 0.002 to 0.01 %, and the balance of Fe and inevitable impurities.

Hereinafter, the reason for limiting the components of the non-oriented electrical steel sheet will be described.

Si: 2.50 to 4.00 wt%

Silicon (Si) is a major element added to reduce eddy current loss of iron loss by increasing specific resistance of steel. When too little Si is added, it may be difficult to obtain low iron loss characteristics. On the other hand, when too much Si is added, the magnetic flux density is significantly reduced, and production may become difficult in a commercial process due to increased brittleness. Accordingly, Si may be included in an amount of 2.5 to 4.0 wt%. Specifically, it may be included in an amount of 2.7 to 3.9 wt%. More specifically, it may be included in an amount of 2.9 to 3.7 wt%.

Mn: 0.10 to 1.00 wt%

Manganese (Mn) is an element that lowers iron loss by increasing specific resistance along with Si and Al, and that improves texture. When too little Mn is added, it may form fine sulfides. When too much Mn is added, the magnetic flux density may be significantly reduced. Accordingly, Mn may be included in an amount of 0.10 to 1.00 wt%. Specifically, it may be included in an amount of 0.20 to 0.95 wt%.

Al: 0.50 to 1.50 wt%

Aluminum (Al) is added because it importantly serves to reduce iron loss by increasing specific resistance along with Si and also serves to reduce magnetic anisotropy to reduce magnetic deviation in a rolling direction and a transverse direction. When too little Al is added, the above-described effect may not be sufficiently obtained. Conversely, when too much Al is added, the magnetic flux density may be significantly reduced. Accordingly, Al may be included in an amount of 0.50 to 1.50 wt%. Specifically, it may be included in an amount of 0.60 to 1.30 wt%.

P: 0.002 to 0.015 wt%

Phosphorus (P) is a grain boundary and surface segregation element, and has an effect of improving a texture of steel. When too little P is added, the above-described effect may not be sufficiently obtained. When too much P is added, grain growth is also suppressed due to a segregation effect, and the rolling property is inferior, so that productivity may be reduced. Accordingly, P may be included in an amount of 0.002 to 0.015 wt%. Specifically, it may be included in an amount of 0.003 to 0.013 wt%.

As: 0.002 to 0.010 wt%

Arsenic (As), like P, is a grain boundary and surface segregation element, and has an effect of improving texture of steel. When too little As is added, the above-described effect may not be sufficiently obtained. When too much As is added, grain growth is suppressed, and the rolling property is inferior, so that productivity may be reduced. Accordingly, As may be include in an amount of 0.002 to 0.010 wt%. Specifically, it may be included in an amount of 0.002 to 0.009 wt%.

In the embodiment of the present invention, P and As satisfy Formula 1 below.

[Formula 1]

$$0.005 \leq ([P]+[As]) \leq 0.015$$

(In Formula 1, [P] and [As] represent a content (wt%) of P and As, respectively.)

P and As are elements that improve magnetism by reducing {111} texture that is unfavorable to magnetism among the textures during the recrystallization process of steel by segregation at a grain boundaries and surfaces. However, as the addition amount thereof increases, the cold rolling property of the steel is also deteriorated, so it should be limited to a predetermined range. In addition, in the embodiment of the present invention, when P and As are added in combination, it was confirmed that the magnetic improvement effect was larger, and according to the results of examining the range of the appropriate addition amount, it was confirmed that the effect may be secured when the P and As satisfy Formula 1. Specifically, the value of Formula 1 may be 0.006 to 0.015.

The non-oriented electrical steel sheet according to the embodiment of the present invention may further include one or more of C: 0.005 wt% or less, S: 0.005 wt% or less, N: 0.005 wt% or less, and Ti: 0.005 wt% or less.

C: 0.005 wt% or less

Carbon (C) is combined with Ti, Nb, and the like to form carbide to degrade magnetism, and when used after processing from the final product to an electrical product, since iron loss increases due to magnetic aging to decreases efficiency of electrical equipment, it may be included in an amount of 0.005 wt% or less. Specifically, it may be included in an amount of 0.003 wt% or less.

S: 0.005 wt% or less

Sulfur (S) is an element that forms sulfides such as MnS, CuS, and (Cu,Mn)S, which are undesirable for magnetic properties, so it may be added as low as possible. Accordingly, an upper limit thereof may be limited to 0.005 wt%. When too little S is included, it is rather unfavorable to texture formation, and since formation of fine sulfides may be accelerated to deteriorate magnetism, it may also be considered that it is included in an amount of 0.001 wt% or more. That is, when S is further included, it may be included in an amount of 0.005 wt% or less, more specifically, in an amount of 0.001 to 0.005 wt%.

N: 0.005 wt% or less

Nitrogen (N) is an element that is undesirable for magnetism such as forming a nitride by strongly combining with Al, Ti, Nb, etc. to inhibit grain growth, so less of it may be contained. Accordingly, when N is further included, it may be included in an amount of 0.005 wt% or less. Specifically, it may be included in an amount of 0.003 wt% or less.

Ti: 0.005 wt% or less

Titanium (Ti) combines with C and N to form fine carbides and nitrides to inhibit grain growth, and as an addition amount of titanium (Ti) is increased, a texture is deteriorated due to the increased carbides and nitrides, so that magnetism is deteriorated. Accordingly, when Ti is further included, it is limited to 0.005 wt% or less. Specifically, it may be included in an amount of 0.003 wt% or less.

The non-oriented electrical steel sheet according to the embodiment of the present invention may further include one or more of Sn: 0.2 wt% or less and Sb: 0.2 wt% or less.

Sn and Sb have an effect of improving the texture, so that they may be added to further improve magnetism. However, when addition amounts thereof are too large, since they may inhibit grain growth and degrade productivity, the addition amounts thereof may be be respectively limited to 0.2 wt% or less.

Cu, Ni, and Cr react with impurity elements to form fine sulfides, carbides, and nitrides to undesirably affect magnetism, so contents thereof are respectively limited to 0.05 wt% or less. In addition, since Zr, Mo, V, etc. are also elements strongly forming carbonitrides, it is preferable that they are not added as much as possible, and they are contained in an amount of 0.01 wt% or less, respectively.

The balance includes Fe and inevitable impurities. The inevitable impurities are impurities mixed in the steel-making and the manufacturing process of the grain-oriented electrical steel sheet, which are widely known in the field, and thus a detailed description thereof will be omitted. In the embodiment of the present invention, the addition of elements other than the above-described alloy components is not excluded, and various elements may be included within a range that does not hinder the technical concept of the present invention. When the additional elements are further included, they replace the balance of Fe.

As the inevitable impurities, there may be, for example, B and Mg, and B may be managed to 0.002 wt% or less and Mg may be managed to 0.005 wt% or less.

In the embodiment of the present invention, the grain satisfies Formula 2 below.

$$[STD] \leq 0.7 \times [GS]$$

([GS] is an average grain size ($\mu$m) measured when 10,000 or more grains having a grain size of 5 to 500 $\mu$m are observed on a surface of the steel sheet, and STD is a standard deviation ($\mu$m) at that time.)

Formula 2 means that the grain size is distributed close to the average. However, as the grain increases, the distribution becomes excessive, and the standard deviation is limited in proportion to the grain size. When the value of Formula 2 is not satisfied, it means that the grain deviation is large, and ultimately the magnetism becomes inferior. Specifically, $0.60 \times [GS] \leq [STD] \leq 0.68 \times [GS]$ may be satisfied.

The standard deviation (STD) may specifically be a parent standard deviation. More specifically, it may be calculated by the following formula for n grains.

$$\sqrt{\dfrac{\sum\limits_{i=1}^{n} (Gs_i - Gs)^2}{n}}$$

$Gs_i$ is a grain size of the i-th grain, and Gs is the average grain size.

The non-oriented electrical steel sheet according to the embodiment of the present invention may have the average grain size ([GS]) of 90 to 200 $\mu$m. Magnetism is further improved in the above-mentioned range.

In addition, the non-oriented electrical steel sheet according to the embodiment of the present invention may have the standard deviation ([STD]) of 60 to 100 $\mu$m. Magnetism is further improved in the above-mentioned range.

The grain size is based on a plate surface (ND surface), and an imaginary circle equal to a grain area is assumed, and a diameter of the circle is the grain size.

Specifically, the non-oriented electrical steel sheet according to the embodiment of the present invention may have the iron loss (W15/50) of 2.0 W/Kg or less.

In addition, the non-oriented electrical steel sheet according to the embodiment of the present invention may satisfy the following Formula 3 to Formula 5.

[Formula 3]

Iron loss (W5/50)/Iron loss (W15/50)≤0.15

[Formula 4]

Iron loss (W10/50)/Iron loss (W15/50)≤0.45

[Formula 5]

Magnetic flux density (B1)/Magnetic flux density (B50)≥0.65

Iron loss ($W_{5/50}$) is iron loss when a magnetic flux density of 0.5 T is induced at a frequency of 50 Hz. Iron loss

($W_{10/50}$) is iron loss when a magnetic flux density of 1.0 T is induced at a frequency of 50 Hz. Iron loss ($W_{15/50}$) is iron loss when a magnetic flux density of 1.5 T is induced at a frequency of 50 Hz.

Magnetic flux density ($B_1$) is magnetic flux density induced in a magnetic field of 100 A/m. Magnetic flux density ($B_{50}$) is magnetic flux density induced in a magnetic field of 5000 A/m.

By satisfying Formula 3 to Formula 5, when used as a material for a motor, it does not provide excellent characteristics only in a specific frequency and magnetic field region, but may consistently provide excellent efficiency even in changes in frequency and magnetic field.

A manufacturing method of a non-oriented electrical steel sheet according to an embodiment of the present invention includes: hot-rolling a slab to manufacture a hot-rolled sheet; cold-rolling the hot-rolled sheet to manufacture a cold-rolled sheet, and final annealing the cold-rolled sheet.

First, the slab is hot-rolled.

The alloy components of the slab have been described in the alloy components of the above-described non-oriented electrical steel sheet, so duplicate descriptions thereof will be omitted. Since the alloy compositions are not substantially changed during the manufacturing process of the non-oriented electrical steel sheet, the alloy compositions of the non-oriented electrical steel sheet and the slab are substantially the same.

Specifically, the slab includes, in wt%, Si: 2.5 to 4.0 %, Mn: 0.1 to 1.0 %, Al: 0.5 to 1.5 %, P: 0.002 to 0.015 %, and As: 0.002 to 0.01 %; and includes the balance of Fe and inevitable impurities, and it may satisfy Formula 1 below.

Other additional elements of the slab have been described in the alloy components of the non-oriented electrical steel sheet, so duplicate descriptions thereof will be omitted.

The slab may be heated before hot-rolling. The heating temperature of the slab is not limited, but the slab may be heated at 1200 °C or less. When the slab heating temperature is too high, precipitates such as nitride, carbide, and sulfide present in the slab are re-dissolved and then finely precipitated during hot-rolling and annealing, thereby inhibiting grain growth and reducing magnetism.

A thickness of the hot-rolled sheet may be 2 to 2.3 mm. In the manufacturing of the hot-rolled sheet, a finish rolling temperature may be 800 °C or higher. Specifically, it may be 800 to 1000 °C. The hot-rolled sheet may be wound at a temperature of 700 °C or less.

After the manufacturing of the hot-rolled sheet, the hot-rolled-sheet-annealing of the hot-rolled sheet may be further included. In this case, a temperature of the hot-rolled-sheet-annealing may be 950 to 1150 °C. When the temperature of the hot-rolled-sheet-annealing is too low, the structure does not grow or finely grows, making it difficult to obtain a magnetically beneficial texture during the annealing after the cold rolling. When the annealing temperature is too high, magnetic grains may excessively grow, and surface defects of the plate may become excessive. The hot-rolled sheet annealing is performed in order to increase the orientation favorable to magnetism as required, and it may be omitted. The annealed hot-rolled sheet may be pickled.

Next, the hot-rolled sheet is cold-rolled to manufacture a cold-rolled sheet. The cold-rolling is finally performed to a thickness of 0.10 mm to 0.50 mm. As necessary, the cold-rolling may be performed once, or two or more times, with intermediate annealing therebetween. In this case, a temperature of the intermediate annealing may be 850 to 1150 °C.

In the cold-rolling, a final reduction ratio may be adjusted to 50 % to 95 %.

Next, the cold-rolled sheet is finally annealed. In the process of annealing the cold-rolled sheet, the annealing temperature is not largely limited as long as it is a temperature generally applied to the non-oriented electrical steel sheet. The iron loss of the non-oriented electrical steel sheet is closely related to the grain size. The iron loss of the non-oriented electrical steel sheet may be divided into hysteresis loss and an eddy current loss, and in this case, the hysteresis loss decreases as the grain size increases, while the eddy current loss increases as the grain size increases, and accordingly, there is an appropriate grain size that minimizes a sum of the hysteresis loss and the eddy current loss. Accordingly, from a macroscopic point of view, it is important to derive and apply an annealing temperature that may secure an optimal grain size, and the annealing temperature is suitable when it is 900 to 1100 °C. When the temperature is too low, the grain may be too fine, so that the hysteresis loss may increase. When the temperature is too high, the grain may be too coarse, so that the eddy current loss may increase, resulting in inferior iron loss. However, from a microscopic point of view, even with the same grain size, the more uniform the microstructure, the better the iron loss. Even if the average grain size is similar, and when the standard deviation is large, since the iron loss is inferior, in order to secure the uniformity of the microstructure, when the cooling rate to 700 °C is controlled to be 30 °C/s or less when cooling after reaching the maximum temperature within the range of 900 to 1100 °C during annealing of the cold-rolled sheet, it was confirmed that excellent magnetism could be obtained. Specifically, the cooling rate may be 15 to 30 °C/s.

In addition, in the embodiment of the present invention, it was confirmed that another important control factor during the final annealing was annealing tension at an inlet side and an outlet side of an annealing furnace. When the annealing tension is high, residual stress in the plate remains and the magnetism is inferior, and in this case, it was observed that although it did not significantly affect the magnetism in the high magnetic field region, the magnetism was significantly inferior according to the residual stress in the low magnetic field region. Although the characteristics of the low magnetic field region are important in addition to the characteristics in the high magnetic field region, in general, the characteristics of the high magnetic field region are mainly checked, while the characteristics of the low magnetic field region are not checked. However, when it is used as a motor material, the characteristics in the low magnetic field as well as the high magnetic field are important for the efficiency of the motor, so it is necessary to improve the characteristics of the low magnetic field.

To this end, when the tension of the inlet side of the annealing furnace is controlled to be 0.15 to 0.31 kgf/mm$^2$ and the tension of the outlet side of the annealing furnace is controlled to be 0.36 to 0.62 kgf/mm$^2$, the residual stress may be reduced, and the characteristics in the low magnetic field as well as the high magnetic field can be improved.

A difference (TS2-TS1) between the tension (TS2) of the outlet side of the annealing furnace and the tension (TS1) of the inlet side of the annealing furnace may be 0.20 to 0.40 kgf/mm$^2$. When it is adjusted in the above-mentioned range, the above-mentioned effect may be further improved.

After the final-annealing, an insulating film may be formed. The insulating film may be formed as an organic, inorganic, and organic/inorganic composite film, and it may be formed with other insulating coating materials. Hereinafter, the present invention will be described in more detail through examples. However, the examples are only for illustrating the present invention, and the present invention is not limited thereto.

**Example 1**

A slab was manufactured with components containing the following Table 1 and Table 2 and the balance of Fe and other inevitable impurities. This was heated to 1180 °C and hot-rolled to manufacture a hot-rolled sheet having a thickness of 2.3 mm. The hot-rolled sheet was pickled after hot-rolled-sheet-annealing at 1000 °C. Thereafter, the hot-rolled sheet was cold-rolled to a thickness of 0.35 mm and final-annealed.

The final-annealing temperature is summarized in Table 2 below, the tension of the inlet side of the annealing furnace was controlled to be 0.25 kgf/mm$^2$ and the tension of the outlet side of the annealing furnace was controlled to be 0.55 kgf/mm$^2$, and the cooling rate up to 700 °C was 25 °C/s when cooled after annealing at the highest temperature.

The grain size was analyzed by observing the microstructure for each specimen, and the iron loss W5/50, W10/50, and W15/50 and the magnetic flux density B1 and B50 were measured through Epstein sample processing, and the results thereof are shown in Table 2 and Table 3 below.

(Table 1)

| Steel type | C | Si | Mn | P | S | Al | Ti | N | As |
|---|---|---|---|---|---|---|---|---|---|
| A1 | 0.0012 | 3.43 | 0.38 | 0.003 | 0.0025 | 0.87 | 0.0024 | 0.0031 | 0.003 |
| A2 | 0.0027 | 3.04 | 1.23 | 0.003 | 0.0032 | 0.49 | 0.0019 | 0.0021 | 0.008 |
| A3 | 0.0019 | 2.42 | 0.53 | 0.007 | 0.0022 | 1.07 | 0.0018 | 0.0009 | 0.005 |
| A4 | 0.0034 | 3.25 | 0.37 | 0.005 | 0.0012 | 0.72 | 0.0008 | 0.0013 | 0.002 |
| A5 | 0.0033 | 3.13 | 0.83 | 0.006 | 0.0027 | 0.62 | 0.0027 | 0.0013 | 0.009 |
| A6 | 0.002 | 3.25 | 0.36 | 0.011 | 0.0024 | 1.12 | 0.0022 | 0.0031 | 0.012 |
| A7 | 0.0031 | 3.36 | 0.23 | 0.009 | 0.0018 | 0.79 | 0.0036 | 0.0026 | 0.004 |
| A8 | 0.0024 | 3.04 | 0.58 | 0.007 | 0.0038 | 1.06 | 0.0019 | 0.0022 | 0.006 |
| A9 | 0.0028 | 2.52 | 0.79 | 0.013 | 0.0018 | 0.66 | 0.0011 | 0.003 | 0.007 |
| A10 | 0.0024 | 2.91 | 0.84 | 0.003 | 0.002 | 0.96 | 0.0019 | 0.0032 | 0.008 |
| A11 | 0.0029 | 3.24 | 0.67 | 0.001 | 0.0014 | 1.33 | 0.0009 | 0.002 | 0.001 |

(Table 2)

| Stee l type | Specific resistance ($\mu\Omega$ cm) | [P]+[A s] (%) | Annealing temperature (°C) | GS ($\mu$m) | ST D ($\mu$m) | [STD]/[G S] |
|---|---|---|---|---|---|---|
| A1 | 64 | 0.006 | 990 | 106 | 72 | 0.68 |
| A2 | 60.1 | 0.011 | 1020 | 92 | 63 | 0.68 |
| A3 | 55.8 | 0.012 | 1040 | 125 | 83 | 0.66 |

(continued)

| Steel type | Specific resistance ($\mu\Omega$ cm) | [P]+[As] (%) | Annealing temperature (°C) | GS ($\mu$m) | STD ($\mu$m) | [STD]/[GS] |
|---|---|---|---|---|---|---|
| A4 | 60.3 | 0.007 | 970 | 101 | 63 | 0.62 |
| A5 | 60.4 | 0.015 | 1040 | 147 | 89 | 0.61 |
| A6 | 64.8 | 0.023 | 1000 | 82 | 65 | 0.79 |
| A7 | 61.5 | 0.013 | 990 | 113 | 75 | 0.66 |
| A8 | 62.9 | 0.013 | 1080 | 162 | 89 | 0.55 |
| A9 | 53.8 | 0.02 | 970 | 89 | 67 | 0.75 |
| A10 | 61.8 | 0.011 | 1050 | 134 | 84 | 0.63 |
| A11 | 68.7 | 0.002 | 1070 | 144 | 88 | 0.61 |

(Table 3)

| Steel type | W5/50 (W/Kg) | W10/50 (W/Kg) | W15/50 (W/Kg) | W5/50 / (W15/50) | (W10/50)/ (W15/50) | B1 (T) | B50 (T) | B1/B50 | Remarks |
|---|---|---|---|---|---|---|---|---|---|
| A1 | 0.28 | 0.77 | 1.86 | 0.15 | 0.41 | 1.14 | 1.67 | 0.68 | Inventive example |
| A2 | 0.33 | 0.88 | 2.15 | 0.15 | 0.41 | 1.09 | 1.65 | 0.66 | Comparative example |
| A3 | 0.28 | 0.94 | 2.27 | 0.12 | 0.41 | 1.09 | 1.65 | 0.66 | Comparative example |
| A4 | 0.25 | 0.73 | 1.85 | 0.14 | 0.39 | 1.12 | 1.68 | 0.67 | Inventive example |
| A5 | 0.24 | 0.83 | 1.93 | 0.12 | 0.43 | 1.13 | 1.68 | 0.67 | Inventive example |
| A6 | 0.32 | 0.98 | 2.23 | 0.14 | 0.44 | 1.07 | 1.64 | 0.65 | Comparative example |
| A7 | 0.25 | 0.78 | 1.84 | 0.14 | 0.42 | 1.14 | 1.68 | 0.68 | Inventive example |
| A8 | 0.27 | 0.81 | 1.95 | 0.14 | 0.42 | 1.12 | 1.67 | 0.67 | Inventive example |
| A9 | 0.35 | 1.02 | 2.36 | 0.15 | 0.43 | 1.08 | 1.64 | 0.66 | Comparative example |
| A10 | 0.26 | 0.78 | 1.93 | 0.13 | 0.4 | 1.12 | 1.69 | 0.66 | Inventive example |
| A11 | 0.32 | 0.89 | 2.12 | 0.15 | 0.42 | 1.07 | 1.65 | 0.65 | Comparative example |

As shown in the Table 1 to Table 3, after final annealing of A1, A4, A5, A7, A8, and A10 in which alloy components and [STD]/[GS] factors were appropriately controlled, they had excellent magnetism in which the iron loss (W15/50) was 2.0W/Kg or less and that satisfied all of the formula of iron loss (W5/50)/Iron loss (W15/50)≤0.15, the formula of iron loss (W10/50)/iron loss (W15/50)≤0.45, and the formula of magnetic flux density (B1)/magnetic flux density (B50)≥0.65.

On the other hand, A2 included an excessive amount of Mn and included a small amount of Al, and as a result, the iron loss W15/50 and B50 were inferior.

A3 included a small amount of Si, and as a result, the iron loss W15/50 and B50 were inferior.

A6 included an excess amount of As and did not satisfy [P]+[As], so that it did not satisfy the [STD]/[GS] range, and as a result, the iron loss W15/50 and B50 were inferior.

A9 did not satisfy [P]+[As], so that it did not satisfy the [STD]/[GS] range, and as a result, the iron losses W15/50 and B50 were inferior. A11 included an excessively small amount of P and As, and as a result, the iron losses W15/50 and B50 were inferior.

## Example 2

A slab was manufactured with components as in the following Table 4 and Table 5 and the balance of Fe and other inevitable impurities. This was heated to 1160 °C and hot-rolled to manufacture a hot-rolled sheet having a thickness of 2.1 mm. The hot-rolled sheet was pickled after hot-rolled-sheet-annealing at 1020 °C. Thereafter, the hot-rolled sheet was cold-rolled to a thickness of 0.35 mm and final-annealed.

The final-annealing temperature, the tension of the inlet side of the annealing furnace, the tension of the outlet side of the annealing furnace, and the cooling rate up to 700 °C during cooling after annealing at the highest temperature are summarized in Table 5 below.

The grain size was analyzed by observing the microstructure for each specimen, and the iron losses W5/50, W10/50, and W15/50 and the magnetic flux densities B1 and B50 were measured through Epstein sample processing, and the results thereof are shown in Table 5 and Table 6 below.

(Table 4)

| Steel type | C | Si | Mn | P | S | Al | Ti | N | As |
|---|---|---|---|---|---|---|---|---|---|
| B1 | 0.0036 | 2.97 | 0.41 | 0.006 | 0.0038 | 0.99 | 0.0017 | 0.0022 | 0.005 |
| B2 | 0.0015 | 3.64 | 0.43 | 0.007 | 0.0022 | 0.75 | 0.0035 | 0.0029 | 0.005 |
| B3 | 0.0041 | 2.78 | 0.59 | 0.01 | 0.0016 | 1.1 | 0.0012 | 0.0013 | 0.003 |
| B4 | 0.0029 | 3.49 | 0.54 | 0.005 | 0.0021 | 0.79 | 0.0032 | 0.0042 | 0.002 |
| B5 | 0.0039 | 3.3 | 0.92 | 0.008 | 0.0021 | 0.59 | 0.001 | 0.0027 | 0.006 |
| B6 | 0.0028 | 2.56 | 0.2 | 0.016 | 0.0033 | 1.48 | 0.005 | 0.0035 | 0.006 |
| B7 | 0.0033 | 3.38 | 0.25 | 0.01 | 0.0029 | 0.8 | 0.0023 | 0.0016 | 0.007 |
| B8 | 0.0019 | 2.91 | 0.55 | 0.003 | 0.0018 | 0.96 | 0.0023 | 0.0031 | 0.009 |
| B9 | 0.0036 | 2.63 | 0.73 | 0.004 | 0.0025 | 1.24 | 0.0015 | 0.0031 | 0.002 |
| B10 | 0.0041 | 3.34 | 0.23 | 0.009 | 0.0031 | 0.85 | 0.0034 | 0.0013 | 0.004 |
| B11 | 0.0029 | 3.14 | 0.56 | 0.003 | 0.0037 | 1.05 | 0.001 | 0.0019 | 0.001 |
| B12 | 0.0018 | 2.78 | 0.93 | 0.006 | 0.0038 | 0.92 | 0.002 | 0.0022 | 0.003 |

(Table 5)

| Steel type | Specific resistance ($\mu\Omega$ cm) | [P]+[As] (%) | Annealing temperature (°C) | Inlet tension (kgf /mm$^2$) | Outlet tension (kgf /mm$^2$) | Cooling rate (°C/s) | GS ($\mu$m) | STD ($\mu$m) | [STD] / [GS] |
|---|---|---|---|---|---|---|---|---|---|
| B1 | 60.4 | 0.011 | 1070 | 0.29 | 0.49 | 23 | 164 | 97 | 0.59 |
| B2 | 65.4 | 0.012 | 980 | 0.47 | 0.68 | 37 | 102 | 73 | 0.72 |
| B3 | 60.5 | 0.013 | 1040 | 0.24 | 0.39 | 21 | 126 | 81 | 0.64 |
| B4 | 64.7 | 0.007 | 980 | 0.19 | 0.55 | 29 | 107 | 67 | 0.63 |
| B5 | 62.5 | 0.014 | 1040 | 0.3 | 0.52 | 24 | 143 | 93 | 0.65 |
| B6 | 60.2 | 0.022 | 1020 | 0.4 | 0.52 | 36 | 97 | 77 | 0.79 |
| B7 | 62 | 0.017 | 1050 | 0.43 | 0.77 | 24 | 104 | 70 | 0.67 |
| B8 | 60.1 | 0.012 | 1000 | 0.19 | 0.47 | 26 | 111 | 76 | 0.68 |

(continued)

| Ste el typ e | Specific resistance ($\mu\Omega$ cm) | [P]+ [As] (%) | Annealing temperat ure (°C) | Inlet tensi on (kgf /mm$^2$) | Outle t tensi on (kgf /mm$^2$) | Cooli ng rate (°C/s) | GS ($\mu$ m) | ST D ($\mu$ m) | [ST D] / [G S] |
|---|---|---|---|---|---|---|---|---|---|
| B9 | 61.2 | 0.006 | 1050 | 0.16 | 0.66 | 37 | 119 | 86 | 0.72 |
| B1 0 | 62 | 0.013 | 1010 | 0.28 | 0.44 | 18 | 10 9 | 70 | 0.64 |
| B11 | 63.8 | 0.004 | 970 | 0.17 | 0.7 | 42 | 82 | 68 | 0.83 |
| B1 2 | 60.4 | 0.009 | 990 | 0.36 | 0.42 | 42 | 95 | 72 | 0.76 |

(Table 6)

| Ste el type | 5/50 (W/K g) | 10/50 (W/Kg) | 15/50 (W/Kg) | W5/50/ (W15/5 0) | (W10/50)/ (W15/50) | 1 (T) | 50 (T) | 1 /B5 0 | Remarks |
|---|---|---|---|---|---|---|---|---|---|
| B1 | 0.23 | 0.79 | 1.81 | 0.13 | 0.44 | 1.1 4 | 1.6 8 | 0.6 8 | Inventive example |
| B2 | 0.35 | 1.02 | 2.16 | 0.16 | 0.47 | 1.0 6 | 1.6 5 | 0.6 4 | Com parati ve example |
| B3 | 0.25 | 0.75 | 1.85 | 0.13 | 0.41 | 1.1 3 | 1.6 7 | 0.6 8 | Inventive example |
| B4 | 0.28 | 0.78 | 1.88 | 0.15 | 0.41 | 1.1 1 | 1.6 7 | 0.6 6 | Inventive example |
| B5 | 0.27 | 0.83 | 1.92 | 0.14 | 0.43 | 1.1 3 | 1.6 8 | 0.6 7 | Inventive example |
| B6 | 0.4 | 1.12 | 2.33 | 0.17 | 0.48 | 1.0 4 | 1.6 5 | 0.6 3 | Com parati ve example |
| B7 | 0.34 | 1 | 2.15 | 0.16 | 0.47 | 1.0 3 | 1.6 4 | 0.6 3 | Com parati ve example |
| B8 | 0.23 | 0.78 | 1.89 | 0.12 | 0.41 | 1.1 6 | 1.6 7 | 0.6 9 | Inventive example |
| B9 | 0.37 | 1.14 | 2.38 | 0.16 | 0.48 | 1.0 2 | 1.6 4 | 0.6 2 | Com parati ve example |
| B10 | 0.23 | 0.8 | 1.87 | 0.12 | 0.43 | 1.1 3 | 1.6 7 | 0.6 8 | Inventive example |
| B11 | 0.37 | 1.05 | 2.19 | 0.17 | 0.48 | 1.0 5 | 1.6 4 | 0.6 4 | Com parati ve example |
| B12 | 0.43 | 1.12 | 2.4 | 0.18 | 0.47 | 1.0 5 | 1.6 4 | 0.6 4 | Com parati ve example |

As shown in the Table 4 to Table 6, after final annealing of B1, B3, B4, B5, B8, and B10 in which all of alloy components, manufacturing process conditions, and grain size characteristics were satisfied, they had excellent magnetism in which the iron loss (W15/50) was 2.0W/Kg or less and that satisfied all of the formula of Iron loss (W5/50)/Iron loss (W15/50)≤0.15, the formula of Iron loss (W10/50)/Iron loss (W15/50)≤0.45, and the formula of Magnetic flux density (B1)/Magnetic flux density (B50)≥0.65.

On the other hand, B2 did not satisfy the conditions of the tension at the inlet side of the annealing furnace, the tension at the outlet side thereof, and the cooling rate, and [STD]/[GS] was not properly formed, and as a result, the core loss formula of Iron loss (W5/50)/Iron loss (W15/50)≤0.15, the iron loss formula of Iron loss (W10/50)/Iron loss (W15/50)≤0.45, and the magnetic flux density formula of Magnetic flux density (B1)/Magnetic flux density (B50)≥0.65 were not satisfied, and the iron loss W15/50 and the magnetic flux density B50 were inferior.

B6 did not satisfy the component of P and [P]+[As], and did not satisfy the inlet tension of the annealing furnace and the cooling rate, so that [STD]/[GS] was not properly formed, the core loss formula of Iron loss (W5/50)/Iron loss (W15/50)≤0.15, the iron loss formula of Iron loss (W10/50)/Iron loss (W15/50)≤0.45, and the magnetic flux density formula of Magnetic flux density (B1)/Magnetic flux density (B50)≥0.65 were not satisfied, and the iron loss W15/50 and the magnetic flux density B50 were inferior.

B7 did not satisfy [P]+[As] and was out of the ranges of the inlet tension and the outlet tension of the annealing furnace, so that the core loss formula of Iron loss (W5/50)/Iron loss (W15/50)≤0.15, the iron loss formula of Iron loss (W10/50)/Iron loss (W15/50)≤0.45, and the magnetic flux density formula of Magnetic flux density (B1)/Magnetic flux density (B50)≥0.65 were not satisfied, and the iron loss W15/50 and the magnetic flux density B50 were inferior.

B9 did not satisfy the outlet tension of the annealing furnace and the cooling rate, and as a result, [STD]/[GS] was not properly formed. As a result, the core loss formula of Iron loss (W5/50)/Iron loss (W15/50)≤0.15, the iron loss formula of Iron loss (W10/50)/Iron loss (W15/50)≤0.45, and the magnetic flux density formula of Magnetic flux density (B1)/Magnetic flux density (B50)≥0.65 were not satisfied, and the iron loss W15/50 and the magnetic flux density B50 were inferior.

Meanwhile, B11 did not satisfy the component addition range of As and [P]+[As], and did not satisfy the outlet tension of the annealing furnace and the cooling rate, so that [STD]/[GS] was not properly formed, the core loss formula of Iron loss (W5/50)/Iron loss (W15/50)≤0.15, the iron loss formula of Iron loss (W10/50)/Iron loss (W15/50)≤0.45, and the magnetic flux density formula of Magnetic flux density (B1)/Magnetic flux density (B50)≥0.65 were not satisfied, and the iron loss W15/50 and the magnetic flux density B50 were inferior.

Finally, B12 did not satisfy the inlet tension of the annealing furnace and the cooling rate, and as a result, [STD]/[GS] was not properly formed. As a result, the core loss formula of Iron loss (W5/50)/Iron loss (W15/50)≤0.15, the iron loss formula of Iron loss (W10/50)/Iron loss (W15/50)≤0.45, and the magnetic flux density formula of Magnetic flux density (B1)/Magnetic flux density (B50)≥0.65 were not satisfied, and the iron loss W15/50 and the magnetic flux density B50 were inferior.

The present invention may be embodied in many different forms, and should not be construed as being limited to the disclosed embodiments. In addition, it will be understood by those skilled in the art that various changes in form and details may be made thereto without departing from the technical spirit and essential features of the present invention. Therefore, it is to be understood that the above-described embodiments are for illustrative purposes only, and the scope of the present invention is not limited thereto.

**Claims**

1. A non-oriented electrical steel sheet, comprising, in wt%: Si: 2.5 to 4.0 %, Mn: 0.1 to 1.0 %, Al: 0.5 to 1.5 %, P: 0.002 to 0.015 %, and As: 0.002 to 0.01, the balance of Fe, and inevitable impurities, and satisfying Formula 1 and Formula 2:

$$[\text{Formula 1}]$$

$$0.005 \leq ([P]+[As]) \leq 0.015$$

(in Formula 1, [P] and [As] represent a content (wt%) of P and As, respectively)

$$[\text{Formula 2}]$$

$$[STD] \leq 0.7 \times [GS]$$

([GS] is an average grain size ($\mu$m) measured when 10,000 or more grains having a grain size of 5 to 500 $\mu$m are observed on a surface of the steel sheet, and STD is a standard deviation ($\mu$m) at that time.)

2. The non-oriented electrical steel sheet of claim 1, further comprising
at least one of C: 0.005 wt% or less, S: 0.005 wt% or less, N: 0.005 wt% or less, and Ti: 0.005 wt% or less.

3. The non-oriented electrical steel sheet of claim 1, further comprising
at least one of Sn: 0.2 wt% or less and Sb: 0.2 wt% or less.

4. The non-oriented electrical steel sheet of claim 1, further comprising
at least one of Cu: 0.05 wt% or less, Ni: 0.05 wt% or less, Cr: 0.05 wt% or less, Zr: 0.01 wt% or less, Mo: 0.01 wt% or less, and V: 0.01 wt% or less.

5. The non-oriented electrical steel sheet of claim 1, wherein
an average grain size ([GS]) thereof is 90 to 200 μm.

6. The non-oriented electrical steel sheet of claim 1, wherein
a standard deviation ([STD]) thereof is 60 to 100 μm.

7. The non-oriented electrical steel sheet of claim 1, wherein
a specific resistance (p) thereof is 60 μΩ cm or more at room temperature.

8. The non-oriented electrical steel sheet of claim 1, wherein
iron loss (W15/50) thereof is 2.0 W/Kg or less.

9. The non-oriented electrical steel sheet of claim 1, wherein
the non-oriented electrical steel sheet satisfies the following Formula 3 to Formula 5:

[Formula 3]

$$\text{Iron loss (W5/50)/Iron loss (W15/50)} \leq 0.15$$

[Formula 4]

$$\text{Iron loss (W10/50)/Iron loss (W15/50)} \leq 0.45$$

[Formula 5]

$$\text{Magnetic flux density (B1)/Magnetic flux density (B50)} \geq 0.65.$$

10. A manufacturing method of a non-oriented electrical steel sheet, comprising:

hot-rolling a slab that includes, in wt%: Si: 2.5 to 4.0 %, Mn: 0.1 to 1.0 %, Al: 0.5 to 1.5 %, P: 0.002 to 0.015 %, and As: 0.002 to 0.01, the balance of Fe, and inevitable impurities and satisfies Formula 1 to manufacture a hot-rolled sheet;
cold-rolling the hot-rolled sheet to manufacture a cold-rolled sheet; and
final-annealing the cold-rolled sheet,
wherein in the final-annealing, a tension of an inlet side of an annealing furnace is 0.15 to 0.31 kgf/mm2, a tension of an outlet of the annealing furnace is 0.36 to 0.62 kgf/mm2, and a cooling rate to 700 °C during cooling after cracking is 30 °C/s or less:

[Formula 1]

$$0.005 \leq ([P]+[As]) \leq 0.015$$

(in Formula 1, [P] and [As] represent a content (wt%) of P and As, respectively.)

11. The non-oriented electrical steel sheet of claim 10, wherein
a difference (TS2-TS1) between a tension (TS2) of the outlet side of the annealing furnace and a tension (TS1) of the inlet side of the annealing furnace is 0.20 to 0.40 kgf/mm$^2$.